# EUROPEAN PATENT APPLICATION

(11) **EP 1 369 950 A2**
(43) Date of publication of application: **10.12.2003**
(21) Application number: 03001288.4
(22) Date of filing: 22.01.2003
(51) Int. Cl.: H01M 8/24, H01M 8/02

(54) **PEM fuel cell and method for replacing MEA in PEM fuel cell**

(30) Priority: 16.05.2002 CN 02120297
(71) Applicant: CSB Battery Co., Ltd., Beitou Area, Taipei City (TW)
(72) Inventor: Chen, Richard, San Diego, CA 92154-7632 (US); Ho, Chien-Hsien, San Diego, CA 92514-7632 (US); Phanthapirat, Thaweechai, San Diego, CA 92514-7632 (US)
(74) Representative: UEXKÜLL & STOLBERG

(57) **Abstract**

The invention is to provide a bipolar plate having keys on at least two sides thereof, with such keys have piercing holes thereon; a bipolar plate, a membrane electrode assembly ("MEA") and a gasket are formed as a unit in the Bipolar Plate Assembly ("BPA"), and provided any of the MEA in a BPA is damaged and needs to be replaced, keys added on other BPAs enable screw rods to fasten sectionally, thus the BPA containing the damaged MEA can be separated, such that the damaged MEA can be dissembled and replaced. The invention further provides a PEM fuel cell, which comprises a plurality of BPAs, with each of such BPA having a number of bipolar plates having keys, MEAs and gaskets. Moreover, the invention further provides a method for replacing MEAs in a PEM fuel cell, whereby damaged MEAs in a PEM fuel cell can be expediently and safely dissembled, repaired or replaced, and the procedure for re-assembling a PEM fuel cell is thus simplified.

## Description

### BACKGROUND OF THE INVENTION

### FIELD OF THE INVENTION

The invention relates generally to Proton-Exchange Membrane ("PEM") fuel cells, more particularly, to a bipolar plate with keys employed in a PEM fuel cell, to a method of expediently and safely disassembling, repairing or replacing damaged Membrane Electrode Assembly ("MEA") through the use of foregoing keys included in the bipolar plate, and to a procedure of simplifying the MEA re-assembling process.

### DESCRIPTION OF THE RELATED ART

A PEM fuel cell is composed of a plurality of cell units, with each cell unit having bipolar plates, MEAs and gaskets.

The type of membrane employed in such PEM fuel cell is polymer membrane, e.g., and, with the Nafion membrane as the electrolyte and platinum as the catalyst, electricity is generated through chemical reactions between hydrogen and oxygen/air. Such PEM fuel cells can be utilized either in households or in automobiles, for the operational temperature thereof is near 80° C.
Certain smaller PEM fuel cells can even be utilized in portable equipment.

The PEM fuel cell is considered a clean energy source, for the means of generating electricity thereby is through chemical reactions between hydrogen and oxygen/air, and the only waste material discharged during such process is water and heat, without producing any chemical or physical waste that might cause environmental or biological concerns and would require higher costs and complicated processing procedures, as would other types of energy-generating sources. The only noise generated during the operation of the PEM fuel cell is by fans in the system, a problem that is easy to solve, e.g., no noise shall be produced, provided pressurized air tanks are utilized in PEM fuel cells.

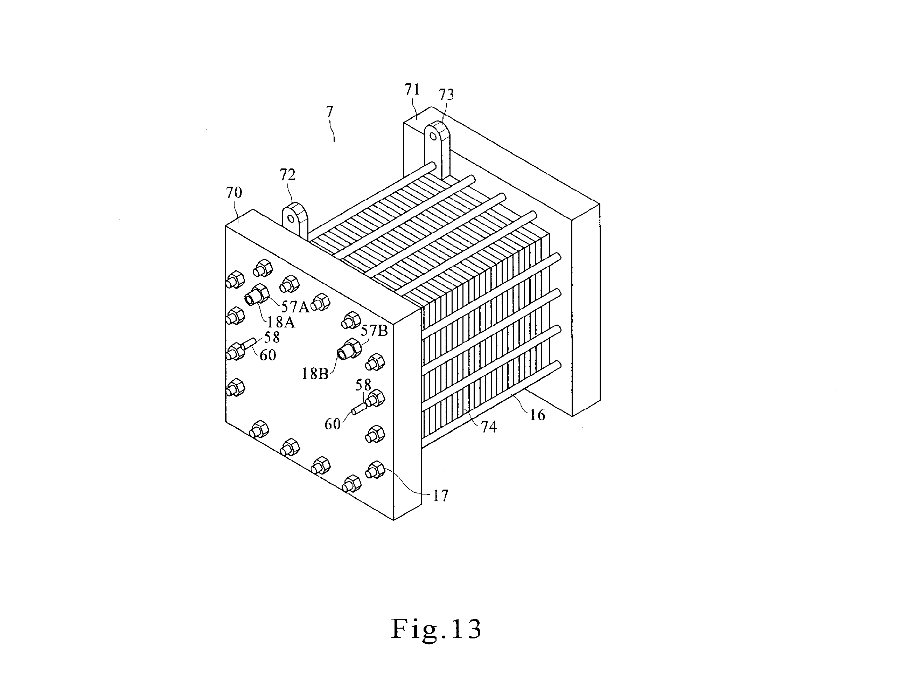

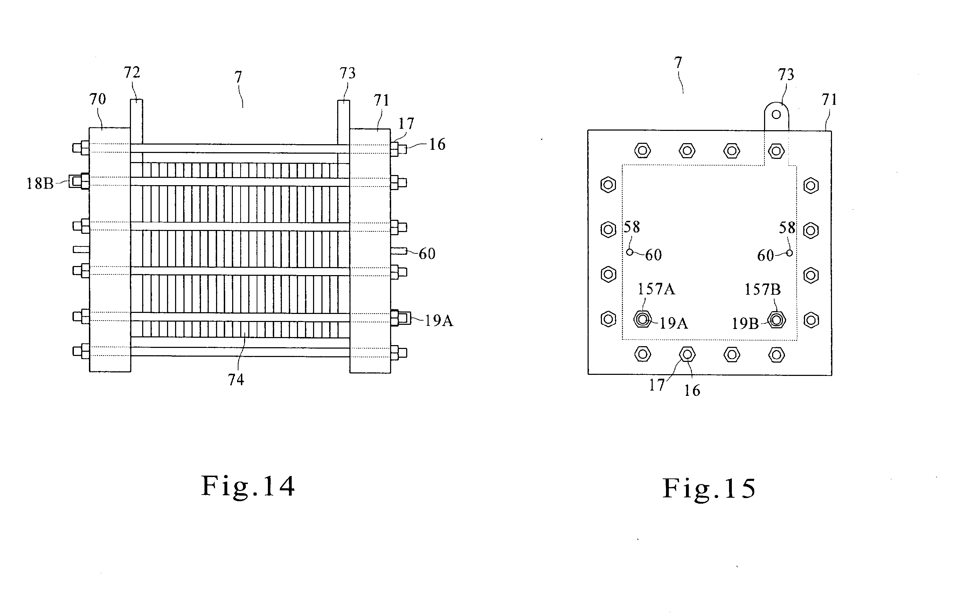

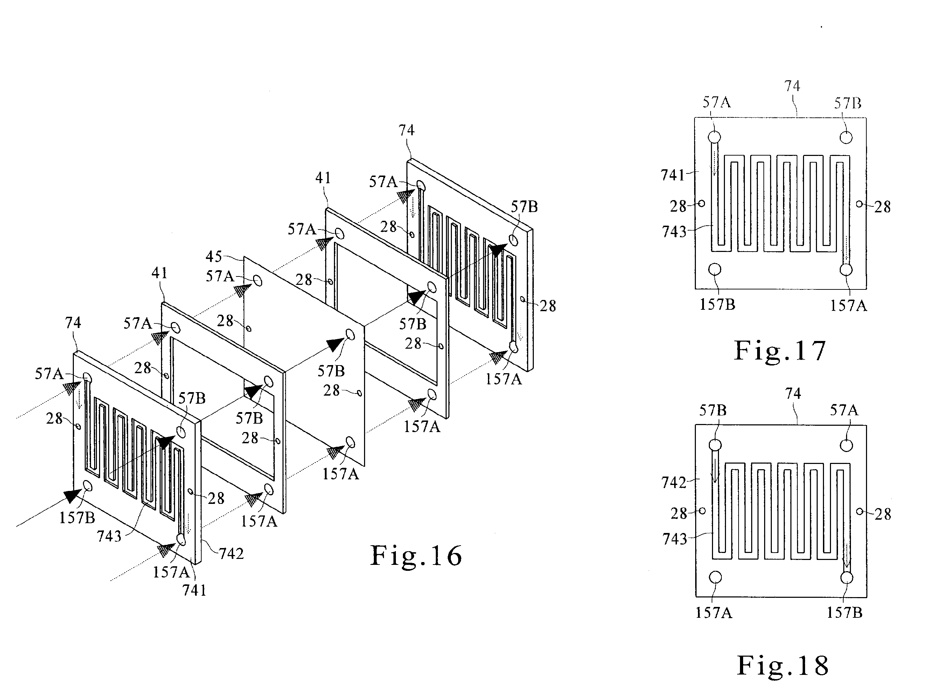

The structure of a conventional PEM fuel cell 7, shown in Fig. 13 through 15, comprises a plurality of rectangular (e.g., square) bipolar plates 74 having identical sizes, a pair of current collectors 72 and 73, and a pair of end plates 70 and 71. A pair of piercing holes 28 is co-axially installed respectively on each foregoing bipolar plates 74 (please refer to Fig. 16) wherethrough a pair of guiding rods 60 is to pierce, such that the bipolar plates 74 are vertically stacked. The guiding rods 60 are utilized for guiding the plurality of bipolar plates 74 so as to expedite the assembling process of the bipolar plates 74. Also such pair of guiding rods 60 pierces through the piercing holes 58 of the pair of end plates 70 and 71 respectively with the ends thereof protruding out of the surfaces of the end plates 70 and 71. The two outer sides of the stacked plurality of bipolar plates 74 are respectively installed with current collectors 72 and 73 utilized as positive and negative electrodes, with the two end plates 70 and 71 installed on the outer sides of the current collectors 72 and 73. By evenly distributing the locations of the plurality of screw rods 16 on the periphery of the plurality of bipolar plates 74 and the current collectors 72 and 73 to pierce therethrough between the end plates 70 and 71, along with screw nuts 17 being fastened respectively on the protruding ends of the screw rods 16, the plurality of bipolar plates 74, the current collectors 72 and 73 and the metal end plate 70 and 71 are integrally compressed and locked, as shown in Fig. 13. The evenly distributed screw rods 16 assure the balance of pressure.

As shown in Fig. 13 to 15, the piercing hole 57A of the end plate 70 is installed with a hydrogen inlet 18A, whereas the piercing hole 57B is installed with an oxygen/air inlet 18B; the piercing hole 157A (corresponding to the foregoing piercing hole 57A on the other side) of the other end plate 71 is installed with a hydrogen outlet 19A, whereas the piercing hole 157B is installed with an oxygen/air outlet 19B. S-shaped grooves 743 are installed on the surfaces of the left side 741 and right side 742 for each bipolar plate 74 so as to channel gases, and all bipolar plates 74 are co-axially installed with the piercing holes 57A so as to channel hydrogen, whereas the piercing holes 57B are utilized for channeling oxygen/air (please refer to Fig. 16 to 18).
Take hydrogen for example, hydrogen is channeled in through the hydrogen inlet 18A of the end plate 70, flowing through the piercing holes 57A and the corresponding gas channel 743 of the bipolar plates 74 and eventually discharged through the hydrogen outlet 19A.

As a matter of fact, the PEM fuel cell 7 also includes a plurality of MEAs which are composite components with each of which having two carbon electrodes pressing on each side of the PEM. As shown in Fig. 16 to 18, each of these MEAs 45 is interposed between two bipolar plates 74. Further, in order to avoid gas leaking or any mixture of hydrogen and oxygen/air thus causing ill operation of the PEM fuel cell, gaskets 41 are interposed between each MEA 45 and each bipolar plate 74, so as to assure normal operation of the PEM fuel cell. The S-shaped groove 743 is installed on one side surface for each bipolar plate 74 (the left side surface 741) utilized for channeling hydrogen, as shown in Fig. 16, wherein the arrow of the dotted line indicates the flowing direction of hydrogen within bipolar plates 74 (please also refer to Fig. 17). Oxygen/air then flows in the S-shaped groove 743 on the other side surface (the right side surface 742) of the bipolar plates 74, with the flowing direction indicated by the arrow of the solid line (please also refer to Fig. 18).
Therefore, both hydrogen and oxygen/air, flowing on the two sides of each MEA 45, are incorporated into water through the catalyst applied on the MEAs 45. Fig. 16 shows the structural diagram of the single MEA 45 and the adjacent bipolar plates 74 and 74. Yet no MEA is installed on the side surface of the two bipolar plates that adjacent to the current collectors 72 and 73, so no groove 743 is installed on the surfaces of such two bipolar plates contacting the current collectors 72 and 73, a design that has already been disclosed by prior arts, thus it is unnecessary to describe here in detail.

All the MEAs 45, gaskets 41 and grooves 743 on the surfaces of the bipolar plates 74 are not shown in drawings for the purpose of expediently describing the conventional PEM fuel cell 7. Please refer to USP No. 5,484,666, No. 6,190,793 and No. 6,207,312 for the detailed composition of the PEM fuel cell, and the bipolar plates and the MEAs thereof.

The MEAs 45 and the bipolar plates 74 in each cell are all conductive material, with all electric currents in such cell being connected and collected by the current collectors 72 and 73. The number and area for the bipolar plates 74 in the fuel cell 7 determines the number of Watt output. It is not necessary to go in detail here, for the structure and operational function of the conventional PEM fuel cell have already become extensively known to the public.

During the operating process of the conventional PEM fuel cell, it is common to have one or more dysfunctional MEAs 45 that need to be replaced. When such problem occurs, each screw nut 17 on either side of the end plates 70 and 71 needs to be disassembled, thus re-forming the assembled state of the cell to be under the loosening state without being locked, and then both end plates 70 and 71 and both current collectors 72 and 73 are further separated, and then the bipolar plates 74, the MEAs 45 and the gaskets 41 are respectively pulled out from the guiding rods 60, until the dysfunctional MEAs are reached and separated. After the dysfunctional MEAs are replaced with new MEAs, the separated MEAs pulled out previously need to be respectively threaded through by the guiding rods 60, and then the current collectors 72 and 73 and the end plates 70 and 71 are threaded through by the guiding rods 60 in order, eventually fastening the disassembled screw nuts 17 onto the ends of the screw rods 16, thus completing the re-assembling procedure.

However, various problems might occur during the processes of disassembling and re-assembling, such as hydrogen leakage due to erroneous re-assembling process of bipolar plates, MEAs and gaskets; further, during the complicated processes of disassembling and re-assembling, intact MEAs that are expensive are prone to percussion and damage. In addition, such process can only be done in manufacturing or maintenance warehouses, thus the whole fuel cell has to be delivered for repair, a procedure that is tremendously inconvenient and time-consuming.

The foregoing USP No. 6,190,793 provides a compression assembly and an elongated tension member, so that the fastening and compressing stacks of bipolar plates can be strengthened, a design that fails to improve upon the drawback of complicated disassembling and re-assembling processes for replacing damaged MEAs in fuel cells. The foregoing USP No. 6,207,312 then provides a new internal gas-channel design for PEM fuel cells, a design that also fails to improve upon the drawback of complicated disassembling and re-assembling processes for replacing damaged MEAs in fuel cells.

As far as the conventional PEM fuel cell is concerned, provided the end plates therein are made of metal, the installment of current collectors is then optional; which is to say, the current collectors are then not necessary for PEM fuel cells having end plates made of metal. On the contrary, provided the end plates therein are not made of metal, the installment of current collectors then becomes mandatory.

### SUMMARY OF THE INVENTION

The primary object of the invention is to provide a bipolar plate having keys, and such bipolar plate, installed on two sides with at least one key having at least one piercing hole, is a unit for the whole Bipolar Plate Assembly ("BPA"). Provided one or more of the MEAs in any of the BPAs are damaged and need to be replaced, the keys of the other BPAs enable the screw rods to lock sectionally, thus the BPAs containing the damaged MEAs can be separated, and the damaged MEAs replaced.

A further object of the invention is to provide a PEM fuel cell having a plurality of BPAs, with each of the BPA comprising bipolar plates having keys, MEAs and gaskets. Each bipolar plate has at least two sides installed with at least one key, on which at least one piercing hole is installed. Provided one or more of the MEAs in any of the BPAs are damaged and need to be replaced, the keys of the other BPAs enable the screw rods to lock sectionally, thus the BPAs containing the damaged MEAs can be separated, and the damaged MEAs replaced.

Another object of the invention is to provide a method for replacing damaged MEAs in PEM fuel cells. Provided any damaged MEA needs to be replaced, certain amount of pressure is applied, under the means of sectional locking, upon the BPAs adjacent to the BPA containing the damaged MEA, so as to hold still the BPAs that do not contain the damaged MEAs; therefore, the bipolar plates, MEAs and gaskets in good condition are kept in their original places with no need to be moved, and only the BPA containing the damaged MEAs is separated so that the damaged MEAs are replaced, a design that significantly shortens the time needed to disassemble and re-assemble the conventional fuel cell, avoid the serious consequences of hydrogen leakage due to erroneous re-assembling processes, and prevent expensive MEAs in good condition from being damaged due to accidental percussions during the disassembling and re-assembling processes.

The keys installed on bipolar plates do not adversely affect the function of fuel cells in any way, the keys further provide heat-dispersing function for fuel cells like cooling fins, which increase heat exchange during the operation of fuel cells, thus heat is released out to the surrounding atmosphere, a function that serves to keep the internal temperature of fuel cells under the range of operationability.

The foregoing method for replacing damaged MEAs in PEM fuel cells saves more replacing time provided the number of BPAs increases.

The foregoing method for replacing bipolar plates in PEM fuel cells provides the end users on-site maintenance service with no need to bring the whole fuel cell back to the manufacturing factories for maintenance.

### BRIEF DESCRIPTION OF THE DRAWINGS

These and other features, aspects and advantages of the present invention will become better understood with regard to the following description, appended claims and accompanying drawings that are provided only for further elaboration without limiting or restricting the present invention, where:
Fig. 1 shows a three-dimensional view of the first embodiment for the PEM fuel cell of the invention, mainly manifesting that a plurality of screw rods locking and incorporating the end plates, current collectors and the plurality of BPAs;
Fig. 2 shows a right side view of the fuel cell of the invention;
Fig. 3 shows a side view of the bipolar plate of the invention;
Fig. 4 shows another variation of the position change regarding the keys installed on bipolar plates of the invention;
Fig. 5 shows another variation of the position change regarding the keys installed on bipolar plates of the invention;
Fig. 6 shows a dissecting view of a BPA containing damaged MEAs based upon the first embodiment of the method for replacing damaged MEAs in fuel cells;
Fig. 7 shows a three-dimensional view of the second embodiment of the fuel cell of the invention;
Fig. 8 shows a three-dimensional view of the third embodiment of the fuel cell of the invention;
Fig. 9 shows a right side view of Fig. 8;
Fig. 10 shows a dissecting view of a BPA containing damaged MEAs based upon the third embodiment of the method for replacing damaged MEAs in fuel cells;

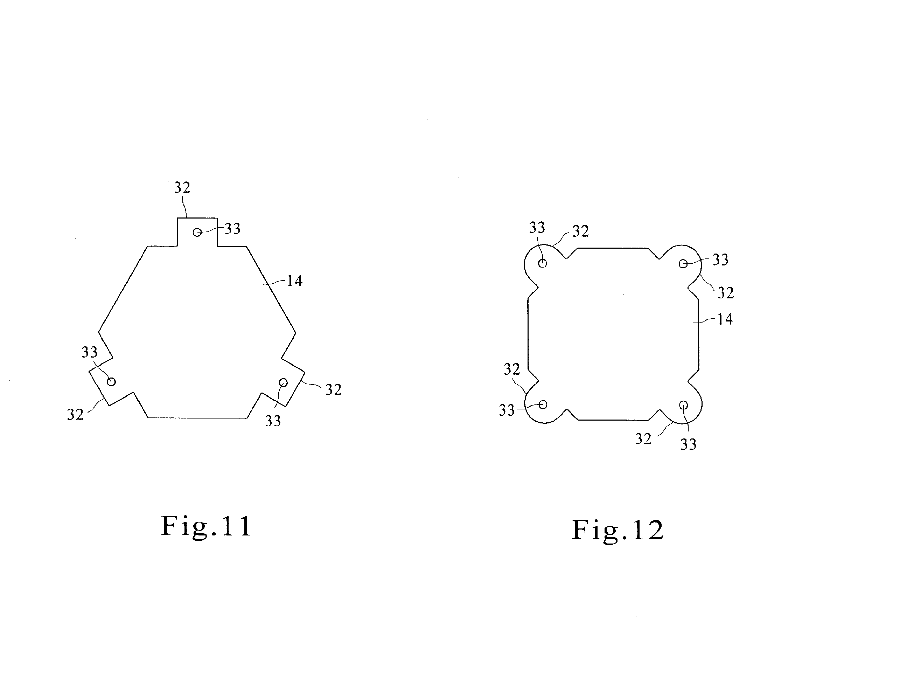

Fig. 11 shows a bipolar plate in hexagonal shape in the embodiment of the invention;
Fig. 12 shows a bipolar plate in octagonal shape in the embodiment of the invention;
Fig. 13 shows a three-dimensional view of the conventional fuel cell, mainly manifesting that a plurality of screw rods locking and incorporating the end plates, current collectors and the plurality of bipolar plates;
Fig. 14 shows a front view of the conventional fuel cell;
Fig. 15 shows a right side view of the conventional fuel cell;
Fig. 16 shows a dissecting view of the bipolar plates, gaskets and MEAs of the conventional fuel cell, along with the flowing directions of hydrogen and oxygen/air;
Fig. 17 shows a structural plane view of the left side surface of a bipolar plate in the conventional fuel cell; and
Fig. 18 shows a structural plane view of the right side surface of a bipolar plate in the conventional fuel cell.

### DETAILED DESCRIPTION OF THE PREFERRED EMBODIMENT

The following is a detailed description of the best presently known modes of carrying out the PEM fuel cell of the invention. This description is not to be taken in a limiting sense, but is made merely for the purpose of illustrating the general principles of the invention. Also for better description of the PEM fuel cell of the invention, MEAs, gaskets and grooves installed on the surfaces of bipolar plates are omitted in this specification.

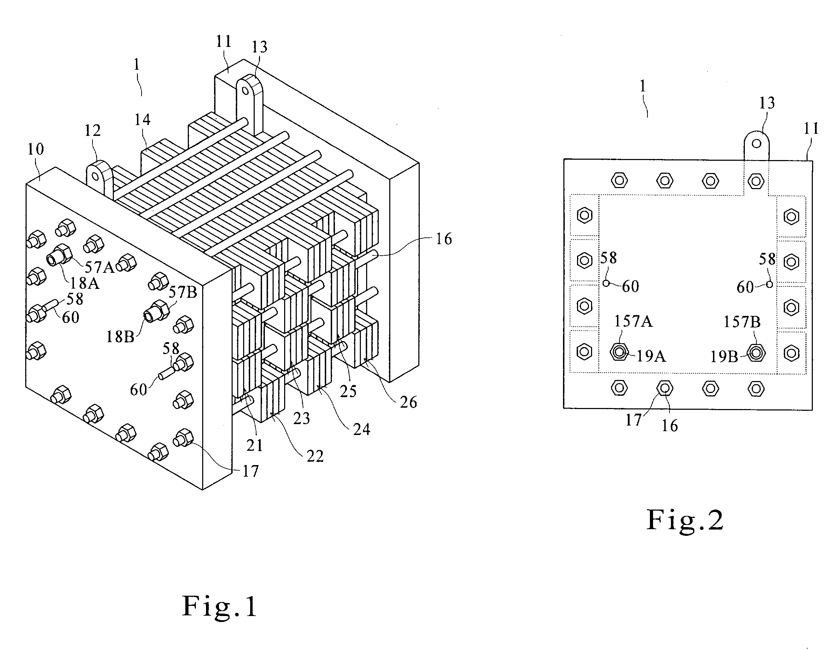

The first embodiment of the PEM fuel cell 1 of the invention is shown in Fig. 1, comprising end plates 10 and 11, current collectors 12 and 13, the first BPA 21, the second BPA 22, the third BPA 23, the fourth BPA 24, the fifth BPA 25, the sixth BPA 26, a plurality of screw rods 16, a plurality of screw nuts 17, and a pair of guiding rods 60. The end plates 10 and 11, both designed as symmetrical structure, can be made of either metal or non-metal material; in this embodiment, the end plates 10 and 11 are designed to have sixteen piercing holes proportionally distributed thereon for being threaded through by sixteen screw rods 16, and a pair of piercing holes 58 for being threaded through by the guiding rods 60. The piercing hole 57A installed on the end plate 10 is fastened with the hydrogen inlet 18A by means of screws, whereas the piercing hole 57B is fastened with the oxygen/air inlet 18B by means of screws. As for the end plate 11, the piercing holes 157A and 157B installed thereon are fastened respectively with the hydrogen outlet 19A and the oxygen/air outlet 19B, please refer to Fig. 2. The foregoing gas inlets 18A and 18B and the gas outlets 19A and 19B respectively have the identical functions to those of the gas inlets 18A and 18B and the gas outlets 19A and 19B of the conventional PEM fuel cell 7 shown in Fig. 13.

Also the foregoing current collector 12 and 13 respectively have the identical functions to those of the current collectors 72 and 73 of the conventional PEM fuel cell 7 shown in Fig. 13.

In the first embodiment of the invention, each of the BPAs 21, 22, 23, 24, 25 and 26 has four bipolar plates 14; however, for practical use, designers can alter the number of the BPAs in cells or the number of bipolar plates in BPAs. As mentioned above, the MEAs, the gaskets and the grooves installed on surfaces of bipolar plates are omitted in this specification for better description. Still, the omitted members are necessary for embodying the invention.

As shown in Fig. 1, the guiding rods 60 are to thread through the piercing holes 28 co-axially installed respectively on the first BPA 21, the second BPA 22, the third BPA 23, the fourth BPA 24, the fifth BPA 25 and the sixth BPA 26 stacked together, thus threading each BPA together, and then the current collectors 12 and 13, end plates 10 and 11 are threaded in order on the outside of the threaded BPAs, thus the two ends of the guiding rods 60 are to protrude out of the end plates 10 and 11.

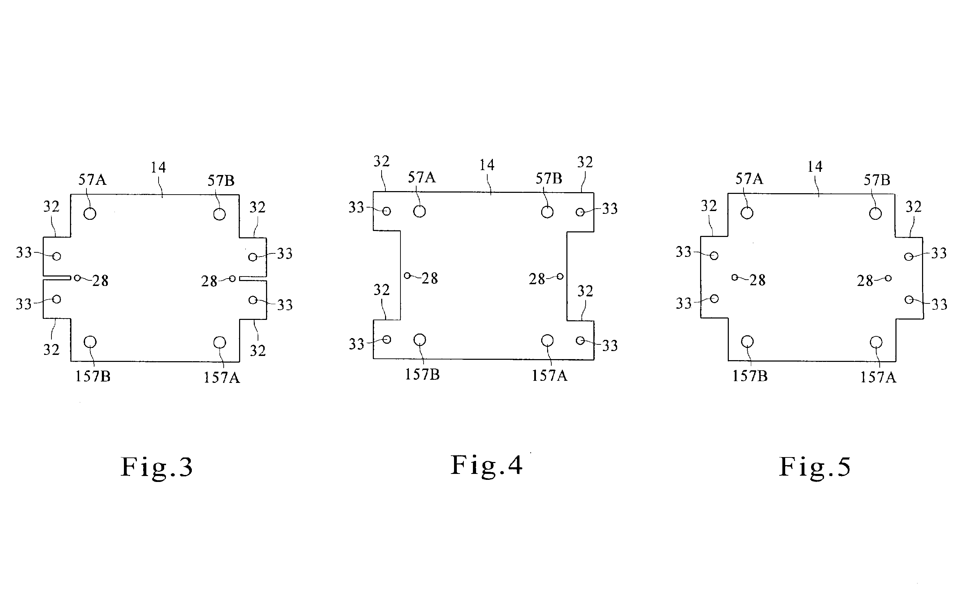

The first BPA 21 has four bipolar plates 14 vertically aligned as shown in Fig. 3. The bipolar plates 14, apart from having the same features of a pair of piercing holes 28, gas inlets 18A and 18B and gas outlets 19A and 19B as the conventional PEM fuel cell, mainly have two sets of two keys 33 and 32 in pairs extending correspondently outwards from both the left side and the right side of the square-shaped bipolar plates, with each key 32 having a piercing hole 33 thereon; each bipolar plate 14 having keys 32 thus becomes a composition unit in the first BPA 21. As for the composition of the third and fifth BPAs 23 and 25, it is identical to that of the first BPA 21. Yet the two keys 32 adjacent to one another on the same side of the bipolar plate 14 shown in Fig. 3 can be combined as a single key 32 as shown in Fig. 5.

Please refer to Fig. 4. The second BPA 22 is similar to the first BPA 21, except that the keys 32 of the second BPA 22 are staggeredly installed without overlapping with the keys 32 of the first BPA 21. As for the composition of the fourth and sixth BPAs 24 and 26, it is identical to that of the second BPA 22.

For each threaded BPA, the piercing hole 33 of the keys 32 on the identical direction are co-axially positioned and aligned with the piercing holes on the end plates 10 and 11, therefore each screw rod 16 is to thread through the end plates 10 and 11 and every key 32 of each BPA, eventually the end plates 10 and 11, current collectors 12 and 13 and each BPA are compressed and locked together through fastening the screw nuts 17 on two protruding ends for each screw rod 16, as shown in Fig. 1.

After connecting the gas inlet 18A with the hydrogen providing source, and connecting the gas inlet 18B with the oxygen/air providing source, the PEM fuel cell 1 of the invention is to operate through reactions from the foregoing gases to produce water and electricity, a principle that is identical to that of the conventional fuel cell and thus it is no need to describe in detail here.

The method of replacing damaged MEAs through utilizing keys of the invention is described in detail as follows in accordance with Fig. 1, Fig. 3, Fig. 4 and Fig. 6.

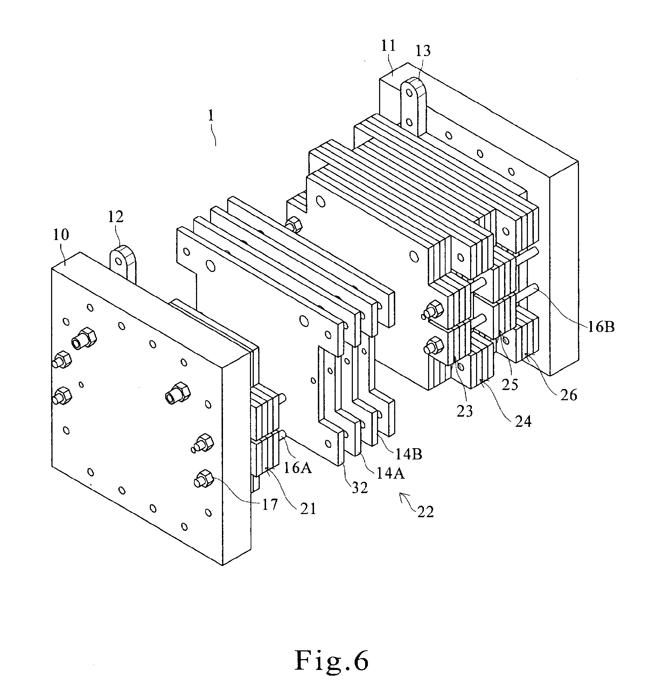

Suppose it is found that the MEA interposed between two bipolar plates 14A and 14B in the second BPA 22 is damaged and needs to be replaced, the key 32 of the invention is utilized for the screw rods 16A and 16B having proper lengths to thread through, so as to lock the BPAs 21 and 23 to 26, thus separating the second BPA 22 containing the damaged MEA (as shown in Fig. 6) for replacement or repair. Therefore the damaged MEA can be replaced and the PEM fuel cell re-assembled easily and expediently, so that the proper operation of the PEM fuel cell can be maintained.

The second embodiment of the invention is elaborated as follows.

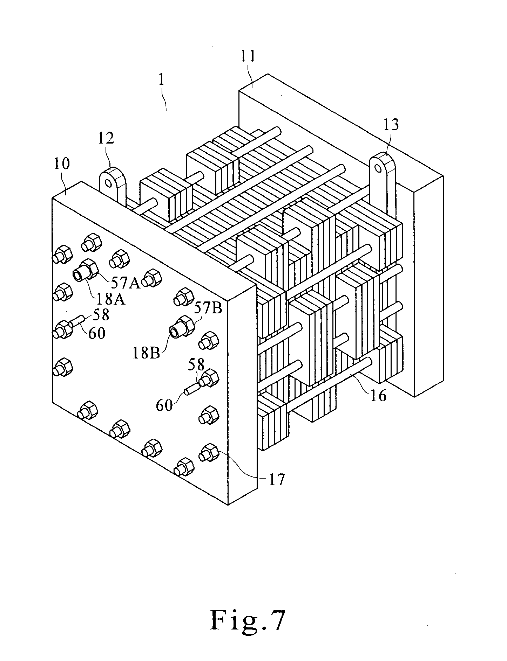

The PEM fuel cell 1 shown in Fig. 7 is not identical to the first embodiment in that, the bipolar plate in Fig. 7 is the bipolar plate 14 shown in Fig. 4 and Fig. 5, and the keys of the bipolar plate are installed in both left-and-right directions, as well as up-and-down directions. According to Fig 7, numerous variations can be developed out of the invention.

The third embodiment of the invention is further elaborated as follows.

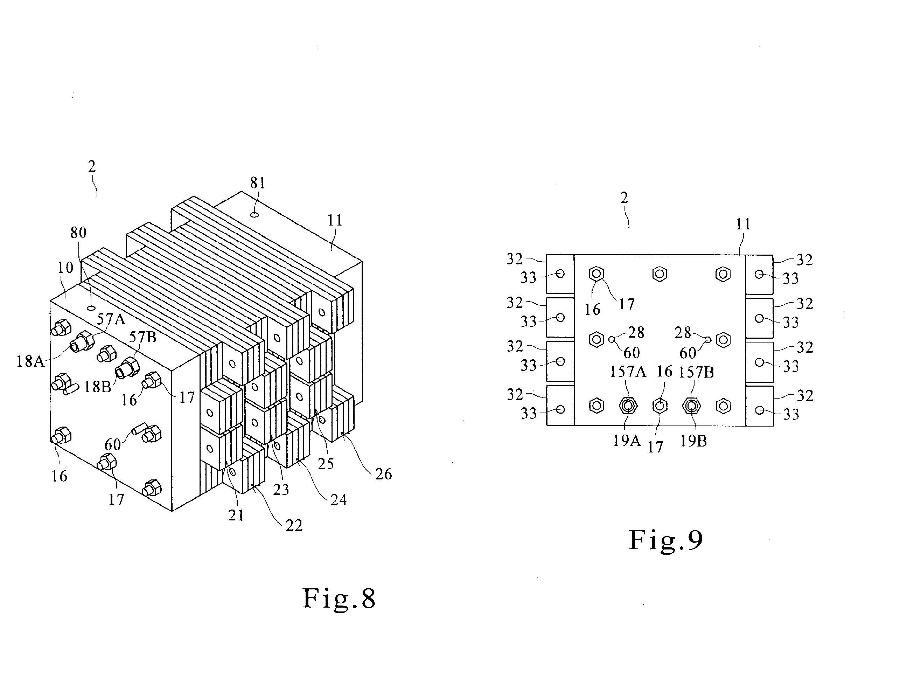

Another type of PEM fuel cell 2 is shown in Fig. 8 in accordance with Fig. 9. Such type of PEM fuel cell 2 is not identical to the PEM fuel cell 1 in that, in the fuel cell 2 shown in Fig. 8, a plurality of screw rods 16 is to directly thread through the end plate 10, the first to sixth BPAs 21 to 26 (including MEAs and gaskets) and the end plate 11, and then the screw nuts 17 having the corresponding numbers are to lock the whole fuel cell 2 together. Since the metal screw rods 16 are to directly thread through the end plates 10 and 11 and each BPA, insulating material (not shown in figures) must be utilized to cover the exterior of the screw rods 16, so as to avoid short circuit. Furthermore, provided the end plates 10 and 11 are made of metal, screw holes 80 and 81 can be added respectively on one side of the end plates 10 and 11 for connecting the current output guide wire, thus no current collectors 12 and 13 are needed for such type of fuel cell 2.

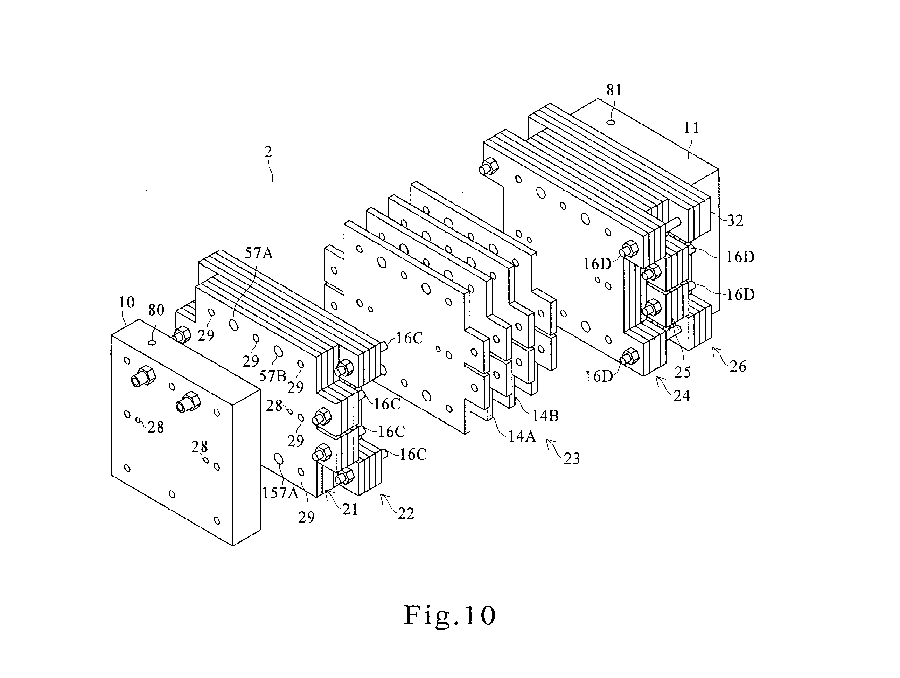

Further, the PEM fuel cell 2 in Fig. 8 has guiding rods 60 that thread through the co-axial piercing holes 29 of the stacked first BPA 21, second BPA 22, third BPA 23, fourth BPA 24, fifth BPA 25, and sixth BPA 26 (shown in Fig. 10), thus threading each BPA together, and then the end plates 10 and 11 are threaded through in order, leaving the two ends of the guiding rods 60 protruding out of the end plates 10 and 11. Each screw rod 16 can then thread through the corresponding piercing holes installed on the end plates 10 and 11, and eventually the screw nuts 17 are fastened on the two ends for each screw rod 16, thus compressing and locking the end plates 10 and 11 and each BPA together.

The method of replacing damaged MEAs by utilizing keys of the invention is further elaborated in accordance with Fig. 8, Fig. 9 and Fig. 10.

Suppose it is found that the MEA interposed between two bipolar plates 14A and 14B in the third BPA 23 is damaged and needs to be replaced, the key 32 of the invention is utilized for the screw rods 16C and 16D having proper lengths to thread through, so as to lock the BPAs 21 and 22 and 24 to 26, thus separating the third BPA 23 containing the damaged MEA (as shown in Fig. 10) for replacement or repair. Therefore the damaged MEA can be replaced and the PEM fuel cell re-assembled easily and expediently, so that the proper operation of the PEM fuel cell can be maintained.

According to the first and second embodiment utilizing keys of the invention to disassemble BPAs of fuel cells, procedures for replacing damaged MEAs are deducted as follows:
1. Disassemble the screw rods that thread through keys of BPAs set to be locked.
2. Fasten BPAs set to be locked by using screw rods having proper lengths and screw nuts.
3. Disassemble the remaining screw rods and screw nuts and separate the BPA containing the damaged MEA.
4. Replace the damaged MEA.

The foregoing procedures can be adjusted according to particular needs without being limited by the invention. After completing the replacement of the damaged MEA, the procedures are reversed so as to re-assemble the PEM fuel cell.

According to the third embodiment utilizing keys of the invention to disassemble BPAs of fuel cells, procedures for replacing damaged MEAs are deducted as follows:
1. Fasten BPAs that do not contain the damaged MEA by using screw rods having proper lengths and screw nuts.
2. Disassemble the existing screw rods and screw nuts and separate the BPA containing the damaged MEA.
3. Replace the damaged MEA.

The foregoing procedures can be adjusted according to particular needs without being limited by the invention. After completing the replacement of the damaged MEA, the procedures are reversed so as to re-assemble the PEM fuel cell.

The number of bipolar plates in each BPA can be various according to different needs for the number of Watt output. As the number of bipolar plates in a BPA becomes larger, the pressure taken by the screw rods and screw nuts becomes greater, thus the BPAs are compressed further by higher pressure.

The positions for keys installing on the bipolar plates are important in that, through the design of a plurality of keys, pressure is to be distributed to the whole bipolar plate without concentrating on areas adjacent to a single key. Therefore, the shape, size, installing position and number of a key on each bipolar plate can vary according to different needs. For example, the bipolar plate 14 can further be hexagonal, with at least two outwardly extending keys 32 being installed thereon; such key is installed with at least one piercing hole 33. Or the bipolar plate 14 can further be octagonal, with at least two outwardly extending keys 32 being installed thereon; such key is installed with at least one piercing hole 33.

The positions for keys of bipolar plates of all types are functioned as pressure-balancing mechanisms; during the replacement of a damaged bipolar plate, the greater the pressure applies on the keys, more securely fastened the bipolar plate is.

The keys installed on bipolar plates do not adversely affect the function of fuel cells in any way, the keys further provide heat-dispersing function for fuel cells like cooling fins, which increase heat exchange during the operation of fuel cells, thus heat is to be released out to the surrounding atmosphere, thus serving to keep the internal temperature of fuel cells under the range of operationability.

The foregoing method for replacing damaged MEAs in PEM fuel cells saves more replacing time provided the number of BPAs increases.

The foregoing method for replacing bipolar plates in PEM fuel cells provides the end users on-site maintenance service with no need to bring the whole fuel cell back to the manufacturing factories for maintenance.

The material for end plates is not limited by the invention. When end plates are made of metal, current collectors can be installed, but not mandatory. when end plates are not made of metal, current collectors then become necessary members in such PEM fuel cell. It is also not limited by the invention as to the number of keys on bipolar plates or shapes of bipolar plates. It is no need to elaborate the order for detailed disassembling of the screw rods or screw nuts as long as the method of sectional locking is followed within the spirit and scope of the invention. The foregoing drawings and elaboration are not to be taken in a limiting sense, but are made merely for the purpose of illustrating the general principles of the invention.

## Claims

1. A PEM fuel cell, comprising:
a pair of end plates, having a plurality of piercing holes enabling a plurality of locking devices to thread through;
at least two sets of bipolar plate assemblies, each bipolar plate assembly comprising certain number of bipolar plates, membrane electrode assemblies and gaskets, said bipolar plate assembly being interposed between said end plates, said bipolar plates having at least two different types with each of every said bipolar plates being extended outwardly to form at least a key, said keys having at least one piercing hole, said keys of each said bipolar plate assembly being staggeredly installed; and
a plurality of locking devices, utilized for locking said pair of end plates and at least two sets of bipolar plate assemblies together.

2. The PEM fuel cell as claimed in claim 1, wherein said end plates, said bipolar plates and said gaskets are further installed with piercing holes for guiding rods to thread through.

3. The PEM fuel cell as claimed in claim 1, wherein said locking devices include screw rods and screw nuts, or other devices providing similar functions.

4. The PEM fuel cell as claimed in claim 1, wherein said end plates are utilized for current collectors, provided said end plates are made of metal material.

5. The PEM fuel cell as claimed in claim 1, wherein current collectors are further interposed between said end plates and said bipolar plate assemblies adjacent to said end plates, provided said end plates are not made of metal material.

6. The PEM fuel cell as claimed in claim 1, wherein said pair of end plates is installed with gas inlets and gas outlets.

7. A bipolar plate utilized in fuel cells, said bipolar plate having at least one key outwardly extending from at least two sides thereof, with said key having at least one piercing hole.

8. A method for replacing membrane electrode assemblies in PEM fuel cells, comprising:
disassemble the screw rods that thread through keys of bipolar plate assemblies set to be locked;
fasten said bipolar plate assemblies set to be locked by using proper locking devices;
disassemble the remaining locking devices and separate the bipolar plate assembly containing the damaged membrane electrode assembly; and
replace the damaged membrane electrode assemblies.

9. The method for replacing membrane electrode assemblies in PEM fuel cells as claimed in claim 8, wherein said method also applies to the replacement of damaged bipolar plates or gaskets in PEM fuel cells.

10. A method for replacing membrane electrode assemblies in PEM fuel cells, comprising:
fasten the bipolar plate assemblies that do not contain any damaged membrane electrode assembly, by using proper locking devices;
disassemble the existing locking devices and separate the bipolar plate assembly containing the damaged membrane electrode assembly; and
replace the damaged membrane electrode assembly.

11. The method for replacing membrane electrode assemblies in PEM fuel cells as claimed in claim 10, wherein said method also applies to the replacement of damaged bipolar plates or gaskets in PEM fuel cells.
